# DEMANDE DE BREVET EUROPEEN

(11) **EP 1 840 778 A1**
(43) Date de publication de la demande: **03.10.2007**
(21) Numéro de dépôt: 06075765.5
(22) Date de dépôt: 29.03.2006
(51) Int. Cl.: G06F 21/00

(54) **Dispositif d'identification à usage unique**

(71) Demandeur: Busser, Laurent, 3511 Dudelange (LU)
(72) Inventeur: Busser, Laurent, 3511 Dudelange (LU)
(74) Mandataire: pronovem

(57) **Abrégé**

La présente invention concerne un dispositif d'identification de l'utilisateur d'un système ou programme informatique local ou distant, à l'aide d'un secret à usage unique, au moyen d'un révélateur transparent (1) au format d'une carte bancaire et d'un tableau de données aléatoires et de boutons logiciels ou tactiles, appelé challenge (2), affiché sur un écran d'ordinateur. Le révélateur (1) et le challenge (2) sont configurés de manière telle que, lorsque le révélateur (1) est appliqué physiquement par l'utilisateur exactement sur le challenge (2) affiché sur l'écran, au moins un premier code secret, qui apparaît visuellement sur l'écran de l'ordinateur par correspondance entre les cases marquées (120) du révélateur (1) et la première zone (21) de données du challenge (2), soit converti en au moins un second code secret, par sélection successive par l'utilisateur de chacune des données du premier code secret, au moyen d'un périphérique de pointage appartenant au dispositif informatique, dans la matrice de boutons logiciels ou tactiles du challenge (2), chacun de ceux-ci étant associé visuellement, par transparence au travers du révélateur (1), à une donnée de la troisième zone (13) du révélateur (1).

## Description

### Objet de l'invention

La présente invention concerne un dispositif permettant à un utilisateur de système informatique local ou distant de s'identifier à l'aide d'un secret à usage unique.

### Etat de la technique

Il existe aujourd'hui de nombreux moyens techniques pour identifier un utilisateur dans un système informatique. Toutefois, dans la pratique, le choix d'une méthode d'authentification des utilisateurs se révèle complexe car il est toujours nécessaire d'obtenir un compromis entre le niveau de sécurité et la souplesse d'utilisation souhaités.

Le niveau de sécurité requis implique une minimisation du risque qu'une tierce partie puisse usurper l'identité d'un utilisateur.

La souplesse d'utilisation implique :
- une simplicité d'utilisation pour l'utilisateur,
- une mobilité maximale des utilisateurs, et
- de faibles coûts de logistique et de maintenance du système.

Il est généralement constaté que ces deux critères fonctionnent généralement de façon inverse, à savoir qu'une grande souplesse d'utilisation entraîne généralement un faible niveau de sécurité et qu'un haut niveau de sécurité entraîne généralement de nombreuses contraintes d'utilisation.

On peut regrouper les techniques d'identification utilisées aujourd'hui de façon répandue en deux grandes catégories :
- les systèmes fonctionnant sur base d'un échange de secret, et
- les systèmes fonctionnant sur base d'une preuve de possession d'un secret.

### Les systèmes à échange de secret

Dans un système à échange de secret, deux personnes, Alice et Bob, connaissent le même secret et il suffit à une de ces personnes de donner le secret à l'autre pour prouver qu'elle est bien ce qu'elle prétend être.

A l'exception des systèmes basés sur des secrets à usage unique, les systèmes à échange de secret apportent le niveau de sécurité le plus faible. En plaçant un logiciel espion sur l'ordinateur d'Alice ou de Bob, entre l'ordinateur d'Alice et l'ordinateur de Bob ou en utilisant une technique de « phishing », il est aisé d'intercepter le secret transmis et de le réutiliser plus tard.

### 1. Le modèle identifiant/mot de passe

Le système le plus connu à échange de secret est le modèle d'identification basé sur un identifiant utilisateur et sur un mot de passe. Lorsqu'Alice veut s'identifier, elle saisit son identifiant et son mot de passe secret et le transmet à Bob. Bob, qui connaît également le mot de passe d'Alice, peut vérifier que c'est bien Alice qui s'identifie.

Les avantages de ce système sont la simplicité d'implémentation, un coût d'implémentation faible, une grande simplicité d'utilisation et une grande mobilité des utilisateurs.

Cette méthode d'identification est probablement la plus faible existant aujourd'hui et ne doit jamais être utilisée pour protéger des informations sensibles.

### 2. Le modèle identifiant/mot de passe/carte de sécurité

Ce modèle est une extension du modèle précédent et a été conçu de façon qu'Alice ne transmette d'une partie de son secret. Alice dispose d'une carte de sécurité en plus de son identifiant et de son mot de passe. Une carte de sécurité est en fait une carte (en plastique, papier ou autre) sur laquelle est imprimée aléatoirement une suite de caractères alphanumériques. Lors de l'authentification, Bob demande à Alice de donner son mot de passe mais également certaines positions (en général 2 ou 3) parmi les positions présentes sur la carte.

Cette méthode améliore la sécurité par rapport à la méthode précédente car si le mot de passe continue à être précisé intégralement par Alice, seule une partie de la carte de sécurité est révélée lors de l'identification. De plus, ce système apporte une relative simplicité d'implémentation et d'utilisation, un coût d'implémentation relativement faible et une grande mobilité des utilisateurs.

Toutefois, en cas d'interception par une personne malveillante, il suffira d'attendre que Bob demande à nouveau les positions révélées pour pouvoir usurper l'identité d'Alice. De plus, après plusieurs identifications effectuées par Alice, la carte de sécurité pourra être aisément reconstituée.

### 3. Les listes de secrets à usage unique

Le principe de cette méthode est simple : un secret ou mot de passe ne peut être utilisé qu'une et une seule fois. Ainsi, quand Alice se sera identifiée après avoir précisé son mot de passe, celui-ci ne sera plus jamais réutilisable et toute personne qui aurait pu intercepter ce mot de passe ne saura pas en faire usage ultérieurement.

Pour qu'Alice puisse s'identifier plusieurs fois, il lui sera nécessaire de disposer d'un nouveau secret à usage unique à chaque fois. Pour permettre à ce modèle de fonctionner, une liste imprimée contenant un grand nombre de mots de passe aléatoires est remise à Alice par Bob. Chaque mot de passe étant identifié par un numéro unique, il suffit alors à Bob de demander à Alice le mot de passe associé à un numéro d'identification unique pour vérifier l'identité d'Alice.

Les avantages de ce système sont une relative simplicité d'implémentation et d'utilisation et un niveau de sécurité élevé contre les logiciels espions tout en conservant une certaine mobilité des utilisateurs.

Le défaut principal de ce système est qu'il est nécessaire de renouveler régulièrement la liste de mots de passe remise à Alice, ce qui entraîne des coûts de maintenance et de logistique importants. Il présente également le défaut, en cas d'attaque par Phishing, de permettre à une personne malveillante de connaître un des mots de passe de la liste et d'attendre que ce mot de passe soit demandé par Bob pour pouvoir usurper l'identité d'Alice.

### 4. Les générateurs de secrets à usage unique

Cette méthode est également basée sur le principe du mot de passe à usage unique mais utilise un accessoire électronique pour générer le mot de passe.

Ces accessoires sont des mini-composants électroniques avec un écran qui affiche régulièrement (en général toutes les soixante secondes), un nouveau mot de passe. Si ces accessoires ont une durée de vie plus longue que les listes de mots de passe imprimées, il est en général nécessaire de les remplacer après deux ou trois ans, ce qui entraîne des coûts de logistique et maintenance très importants.

Cette méthode augmente considérablement la sécurité car en cas d'attaque par Phishing, un tiers malveillant ne dispose qu'au maximum de 60 secondes, dans l'exemple cité, pour s'authentifier auprès de Bob en lieu et place d'Alice.

Les autres avantages de ce système sont une relative simplicité d'implémentation et d'utilisation, la mobilité des utilisateurs, un niveau de sécurité élevé contre les logiciels espions et une sécurité améliorée contre le phishing. Les inconvénients sont les coûts d'implémentation, de logistique et de maintenance très élevés, avec possibilité de casse ou de panne.

### Les systèmes prouvant la possession d'un secret

Ces systèmes sont généralement reconnus comme sûrs. Au lieu de révéler qu'elle possède un secret, Alice devra simplement apporter la preuve qu'elle connaît ce secret.

### 1. Les systèmes à clef publique

Dans ces systèmes, Alice dispose d'une clef publique qui pourra être révélée à tout le monde, et une clef privée qu'elle devra garder secrète et ne jamais révéler. Ces deux clefs ont la particularité d'être complémentaires et que tout ce qui pourra être réalisé avec une clef ne pourra être vérifiée qu'avec l'autre clef.

Quand Alice doit s'identifier, elle va crypter à l'aide de sa clef privée un challenge généré par Bob et transmettre le résultat de ce cryptage à Bob. Si Bob veut vérifier qu'il s'agit bien d'Alice, il lui suffira d'utiliser la clef publique d'Alice pour décrypter le résultat du cryptage et vérifier que le challenge est bien celui qu'il avait soumis à Alice.

Les avantages de ce système sont un très bon niveau de sécurité si la clef privée a été stockée sur une carte à puce, ainsi que la possibilité de générer des signatures électroniques. Les inconvénients sont des coûts d'implémentation, de logistique, de support et de maintenance très élevés en cas d'usage d'une carte à puce pour conserver la clef privée, la possibilité de casse ou de panne en cas d'usage d'un lecteur de carte à puce et une faible mobilité en raison de la nécessité d'un lecteur de carte à puce, périphérique encore très peu répandu.

### 2. Autres systèmes brevetés

FR-A-2 819 067 propose une solution pour un terminal qui utilise conjointement une smartcard et un écran tactile. Quand la smartcard est insérée dans le terminal, un clavier aléatoire est généré pour que l'utilisateur puisse saisir son code PIN. Un observateur situé à proximité immédiate ne peut donc pas déduire le code PIN en observant le mouvement du doigt de l'utilisateur. Un système équivalent est proposé par US-A-5,949,348 et US-A-4, 479, 112. Dans ces systèmes le code PIN n'est jamais envoyé au serveur et ils ne sont pas utilisables pour une identification à distance auprès d'un serveur. De plus, il est nécessaire de fournir un lecteur de cartes à chaque utilisateur.

GB-A-2 416 058 propose une solution dans laquelle le serveur informatique génère un clavier aléatoire sur lequel l'utilisateur doit reproduire avec sa souris un code qui lui est propre. Ce n'est pas la valeur associée à chaque touche qui est envoyée au serveur mais les coordonnées de chaque clic de la souris sur les touches. Cette solution permet de ne pas avoir à délivrer de carte aux utilisateurs et assure une meilleure protection contre l'interception des données d'identification d'un utilisateur. Toutefois, le code secret envoyé au serveur étant constant et la signification de chaque touche étant affichée à l'écran, il sera toujours possible à un logiciel espion de récupérer cette information et de se reconnecter plus tard en utilisant les informations de l'utilisateur.

L'examen de ces différentes méthodes d'authentification montre qu'il y a donc un réel besoin pour une méthode et un système offrant un niveau de sécurité élevé grâce à la preuve de possession d'un secret tout en évitant les coûts et la complexité élevés liés à l'utilisation d'un périphérique électronique.

### Buts de l'invention

La présente invention vise à fournir une solution qui permette de s'affranchir des inconvénients de l'état de la technique.

En particulier, l'invention a pour but de proposer un système qui offre un haut niveau de sécurité tout en conservant une très grande souplesse d'utilisation et une très grande mobilité de l'utilisateur.

### Principaux éléments caractéristique de l'invention

Selon la revendication 1, un premier objet de la présente invention se rapporte à un dispositif d'identification de l'utilisateur d'un système ou programme informatique local ou distant, à l'aide d'un secret à usage unique, par exemple à destination d'applications bancaires, caractérisé en ce qu'il comporte :
- un révélateur comprenant un support graphique essentiellement plan et transparent présentant une première zone sur laquelle est imprimé un code identifiant, une deuxième zone contenant un quadrillage virtuel dont une pluralité de cases est marquée graphiquement et une troisième zone sur laquelle est imprimée une matrice de données, et
- un tableau de données aléatoires et de boutons logiciels ou tactiles, appelé challenge, affiché sur un écran d'ordinateur et comprenant une première zone de données affichées dans une matrice correspondant au quadrillage de la deuxième zone du révélateur et une seconde zone comportant une matrice regroupant lesdits boutons et dont la position correspond à la matrice de données imprimées dans la troisième zone du révélateur ;
le révélateur et le challenge étant configurés de manière telle que, lorsque le révélateur transparent est appliqué physiquement par l'utilisateur exactement sur le challenge affiché sur ledit écran, au moins un premier code secret, qui apparaît visuellement sur l'écran de l'ordinateur par correspondance entre les cases marquées du révélateur et ladite première zone de données du challenge, soit converti en au moins un second code secret, par sélection successive par l'utilisateur de chacune des données du premier code secret, au moyen d'un périphérique de pointage appartenant au dispositif informatique, dans ladite matrice de boutons logiciels ou tactiles, chacun de ceux-ci étant associé visuellement et univoquement, par transparence au travers du révélateur, à une donnée de la troisième zone du révélateur.

Selon la revendication 9, un deuxième objet de l'invention concerne un procédé d'identification de l'utilisateur d'un système ou programme informatique local ou distant, utilisant un secret à usage unique, au moyen du dispositif décrit ci-dessus, caractérisé en ce qu'il comporte les étapes suivantes :
- identification préalable par entrée par l'utilisateur d'un identifiant personnalisé,
- génération d'un challenge de données aléatoires sur l'écran de l'ordinateur,
- application par l'utilisateur du révélateur sur l'écran de l'ordinateur de manière telle que le révélateur (1) soit mis en concordance exacte avec le challenge,
- saisie par l'utilisateur, au moyen d'un périphérique de pointage, dans la zone de boutons logiciels ou tactiles du challenge, d'un premier code secret à au moins 4 caractères ou symboles révélé visuellement sur l'écran par correspondance univoque de cases marquées du révélateur avec des données aléatoires du challenge affiché, les données à saisir apparaissant au niveau des boutons du challenge également par transparence du révélateur apposé sur le challenge,
- conversion selon une loi de correspondance univoque du premier code secret en un second code secret, et
- vérification par le système informatique que le second code secret correspond bien à l'identifiant de l'utilisateur et/ou à la carte qui lui a été attribuée.

Selon la revendication 13, un troisième objet de l'invention concerne un procédé de production de cartes-révélateurs appartenant au dispositif d'identification décrit ci-dessus, caractérisé par les étapes suivantes :
- génération ou importation d'identifiants d'utilisateur,
- génération aléatoire de cartes-révélateurs (1) pour chaque nouvel utilisateur ou pour un utilisateur ou un ensemble d'utilisateurs déterminé,
- exportation dans un fichier externe d'une description desdites cartes, et
- impression d'une ou plusieurs desdites cartes.

Selon la revendication 15, l'invention se rapporte également aux logiciels permettant d'informatiser les procédés décrits ci-dessus.

Des formes d'exécution préférées de l'invention sont encore décrites dans les revendications dépendantes.

### Brève description des figures

La figure 1 représente un exemple de révélateur selon une première forme d'exécution préférée de l'invention, attribué à un utilisateur pour s'identifier.

La figure 2 représente un exemple de challenge affiché par le système informatique lors d'une procédure d'identification de cet utilisateur, à utiliser en combinaison avec le révélateur de la FIG.1.

La figure 3 représente la révélation du secret par la superposition du révélateur et du challenge précités.

La figure 4 représente un exemple d'application permettant à l'utilisateur d'ajuster la taille du challenge à l'écran en fonction de la résolution de l'affichage du système et du calibre de la carte faisant office de révélateur.

La figure 5 représente un exemple de révélateur selon une deuxième forme d'exécution préférée de l'invention.

La figure 6 représente la révélation du secret par la superposition du révélateur de la figure 5 et du challenge de la figure 2.

### Description de formes d'exécution préférées de l'invention

Le dispositif selon la présente invention permet d'identifier un utilisateur à l'aide d'un secret à usage unique sans utiliser d'appareil électrique ou électronique, tout en conservant pour l'utilisateur une totale liberté de déplacement.

### 1. Procédure d'identification

Chaque utilisateur possède un identifiant, un mot de passe et un « révélateur ».

### 1.1 Le révélateur

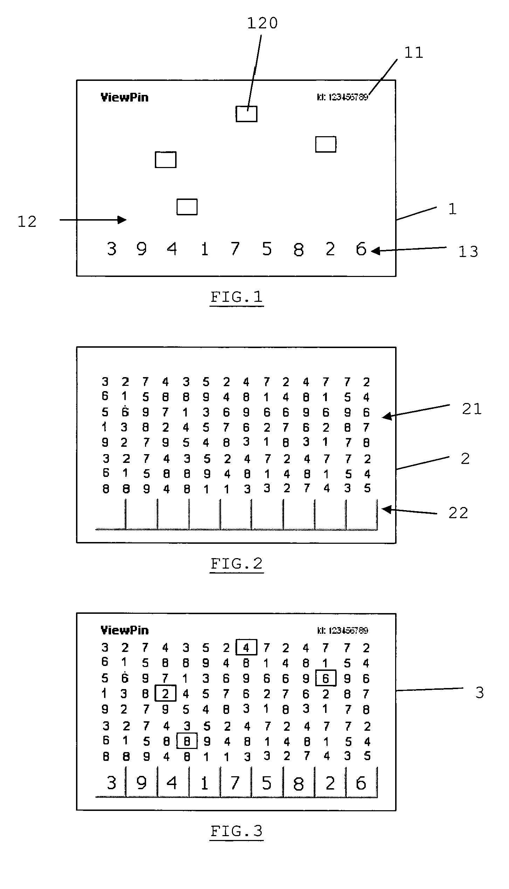

Le révélateur 1 est une carte plastique transparente, qui aura par exemple le format standard d'une carte de crédit et qui aura l'apparence représentée sur la FIG.1. Toutefois, la carte pourra être de dimensions soit plus petites pour être utilisable avec des terminaux miniature ou des téléphones portables, soit plus grandes si le terminal de l'utilisateur le nécessite.

Selon une première forme d'exécution préférée de l'invention, dans la partie supérieure de la carte, on trouve le nom commercial de l'émetteur de celle-ci (à gauche) ainsi que le numéro unique d'identification 11 de la carte (à droite).

Dans la partie centrale, on trouve des encadrements carrés 120 qui sont placés à des positions aléatoires sur une grille régulière virtuelle. La position de ces carrés est différente pour chaque carte émise. De même, il est possible d'utiliser un nombre quelconque de carrés mais un minimum de 4 est recommandé. Les carrés étant utilisés pour mettre en évidence certaines parties de la carte, il est possible d'utiliser alternativement, par exemple des ronds ou des symboles soulignés ou encore une couleur de fond qui conserve la transparence.

Enfin, la partie inférieure de la carte affiche un ensemble de 9 symboles ou caractères 13 qui, dans le cas présent, sont constitués de la séquence « 394175826 » (FIG.1) mais qui pourraient être des lettres ou des symboles graphiques par exemple.

### 1.2 Le challenge

Lorsque l'utilisateur veut s'identifier sur un site Internet par exemple, il soumet, au niveau d'un premier écran, son identifiant et son mot de passe de façon classique, pour arriver ensuite à un deuxième écran d'identification qui concerne la présente invention.

Sur ce deuxième écran, le système informatique affiche ce que nous appellerons un « challenge » 2. Le challenge 2 a l'apparence représentée sur la FIG.2.

A chaque procédure d'identification, un nouveau challenge est généré aléatoirement. Il se compose dans l'exemple présent d'un tableau de 8 lignes et 14 colonnes définissant 8 x 14 positions contenant chacune un chiffre de 1 à 9. Il est toutefois possible de réduire ou d'augmenter le nombre de lignes et de colonnes.

La dernière ligne du challenge représente 9 boutons 22 vierges de toute inscription. A chaque bouton 22 est associée une valeur qui correspond au rang, c'est-à-dire à la position, du bouton dans la ligne. Dans l'exemple ci-dessus, le premier bouton à gauche a le rang 1 et le dernier le rang 9.

### 1.3 Révélation du secret

Pour pouvoir s'identifier, l'utilisateur doit utiliser son révélateur pour comprendre quel code lui est demandé.

Il va donc appliquer physiquement le révélateur sur l'écran de son ordinateur et grâce à la transparence du révélateur, il verra apparaître le dessin 3 représenté sur la FIG.3.

En lisant dans les lignes de gauche à droite et puis de haut en bas les chiffres qui sont mis en valeur par un encadrement, il sait qu'il doit entrer la combinaison 4628.

En lisant la dernière ligne (boutons), il peut voir que chaque bouton qui était précédemment vierge de toute inscription sur l'écran généré a maintenant une valeur qui lui est associée.

Pour reproduire le code demandé, il suffit à l'utilisateur de sélectionner avec un dispositif de pointage -par exemple cliquer avec une souris-, dans l'ordre, le troisième, le neuvième, le huitième et enfin le septième bouton. Il aura ainsi généré la séquence 3987.

### 1.4 Validation du secret

Lorsque l'utilisateur validera le code généré en cliquant sur les boutons correspondants de la dernière ligne du challenge, la requête sera envoyée au système informatique. Le système informatique, qui connaît l'identifiant de l'utilisateur ainsi que la carte qui lui a été attribué, pourra aisément vérifier la valeur saisie.

En effet, sachant la valeur associée à chaque touche de l'écran par apposition du révélateur de l'utilisateur, il suffira de refaire l'association en sens inverse pour comprendre que la combinaison 3987 correspond de manière univoque pour cet utilisateur à la combinaison 4628.

Connaissant également les cases qui sont encadrées sur la carte de l'utilisateur (révélateur), il sera aisé pour le système informatique de vérifier que la valeur de combinaison 4628 est bien celle qui aura été demandée et donc de valider l'identité de l'utilisateur.

### 1.5 Calibrage

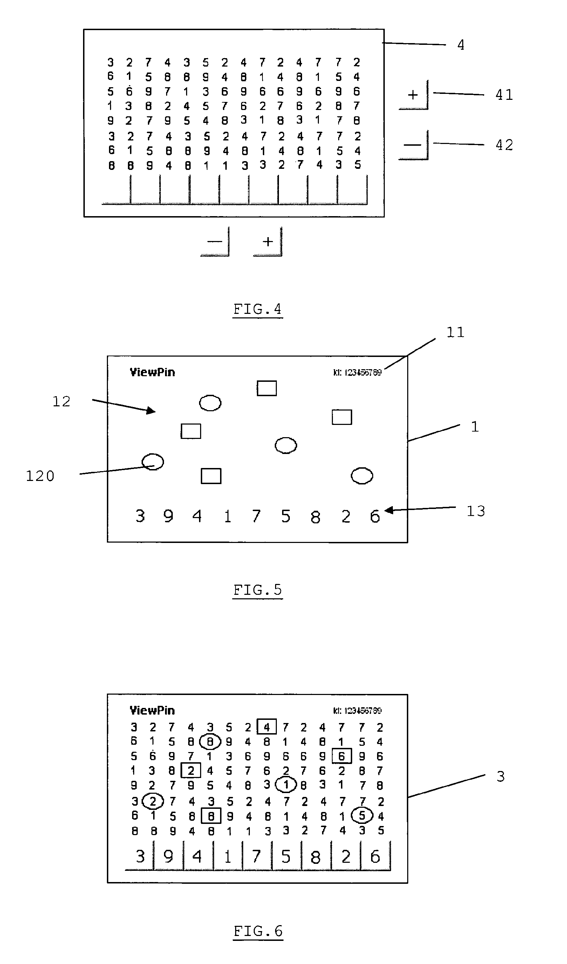

En raison des différences de résolution possibles entre les écrans de chaque utilisateur, il est nécessaire de fournir une fonction de calibrage qui permettra à l'utilisateur d'ajuster à l'écran la taille du challenge en fonction de la résolution effective du système (FIG.4).

En cliquant sur les touches « + » 41 et « - » 42, l'utilisateur aura ainsi la possibilité d'agrandir ou de réduire la taille du challenge 4 à l'écran afin qu'elle s'adapte exactement à la taille du révélateur.

### 1.6 Version avancée

Dans une version avancée représentée sur les FIG. 5 et 6, la solution proposée permet d'augmenter le niveau de sécurité par l'utilisation d'un révélateur permettant la génération simultanée de deux combinaisons possibles.

Sur la carte 1 de l'utilisateur figureront les symboles représentés sur la FIG.5.

Le challenge affiché à l'écran restera le même qu'auparavant mais quand l'utilisateur appliquera sa carte sur l'écran, il verra le secret représenté sur la FIG.6.

L'utilisateur sera alors invité à saisir soit la combinaison désignée par les ronds, soit celle désignée par les carrés du révélateur. Le choix sera laissé à l'entière liberté de l'utilisateur et ne sera jamais imposé par l'application informatique. Ceci va permettre de rendre plus complexe la tâche de divination du contenu de la carte 1 par une tierce partie car celle ci ne saura jamais à quelle combinaison correspondent les actions de l'utilisateur sur les touches.

### 1.7 Variantes

La carte transparente pourra être percée au niveau de chaque bouton afin de permettre son utilisation avec des assistants personnels (PDA) munis d'un stylet.

Une carte spéciale avec un effet de loupe au niveau des cases pourra également être créée à l'intention des personnes mal voyantes.

Dans certaines versions, on pourra utiliser des lettres ou des symboles graphiques en lieu et place de chiffres.

### 2. Les logiciels espions et le phishing

A chaque demande d'identification émise par un utilisateur, le système va générer aléatoirement un challenge. La probabilité qu'un système informatique puisse générer deux fois la même demande pour un même utilisateur est extrêmement faible.

Cette demande étant différente à chaque fois, il sera impossible à une personne malveillante, ayant enregistré les informations saisies par l'utilisateur, de pouvoir les réutiliser. Il sera cependant toujours possible d'enregistrer de nombreuses séquences d'identification afin de tenter de déterminer la combinaison révélée par la carte mais le nombre de tentatives nécessaires sera trop élevé pour que cette attaque puisse se révéler efficace.

Enfin, la carte de révélation étant un accessoire non électronique et non connecté à l'ordinateur, il ne sera possible d'en connaître le contenu uniquement en prenant possession de cette carte physiquement.

### 3. La production industrielle

Il existe de nombreux moyens de générer une carte plastique transparente apte à la réalisation du révélateur selon la présente invention. Une méthode recommandée est par exemple d'utiliser du matériel standard de production: feuille plastique transparente du type utilisé généralement pour les rétroprojecteurs, imprimante laser ou à jet d'encre pour l'impression des cartes et machine de plastification pour augmenter la durée de vie des cartes

En produisant un nombre important de cartes, il sera très facile de ramener le coût par carte à moins d'un euro par utilisateur ce qui, en tablant sur une durée de vie moyenne des cartes de cinq ans, ramène le coût de la carte à un vingtaine de centimes d'euros par an et par utilisateur.

### 4. Les logiciels fournis avec l'invention

### 4.1 L'application de démonstration

Afin de permettre une exploitation plus simple, l'invention sera fournie avec une application de démonstration qui sera disponible en « open source », afin de permettre aisément l'intégration dans toute application existante.

Cette application de démonstration montrera comment un masque peut être généré pour être affiché à l'écran ainsi qu'une fonction de calibrage permettant d'ajuster la taille de ce masque en fonction de la résolution d'écran.

### 4.2 L'application de génération et vérification des challenges

Cette application sera fournie sous forme d'une API (*Application Programming Interface*) qui pourra générer les challenges aléatoires mais également les vérifier. Cette API sera disponible de préférence dans plusieurs langages de programmation.

### 4.3 Le logiciel de production des cartes

Ce logiciel permettra de générer des cartes destinées à être distribuées aux utilisateurs.

Il offrira les fonctions suivantes:
- une fonction de génération ou d'importation d'identifiants utilisateurs,
- une fonction de génération aléatoire de cartes pour chaque nouvel utilisateur ou pour un utilisateur ou un ensemble d'utilisateurs précis,
- une fonction d'exportation dans un fichier externe de la description des cartes associée à chaque utilisateur, et
- une fonction d'impression des cartes (toutes, une ou bien une sélection).

Les paramètres suivants pourront être configurés :
- l'ensemble de symboles devant être utilisés pour générer les cartes,
- l'autorisation d'utiliser des symboles doubles par case,
- les nombres minimum et maximum de cases révélant le secret,
- le nombre de cases et de touches sur une carte (lignes x colonnes),
- éventuellement la mention sur la carte d'un nom d'application,
- éventuellement la mention sur la carte de l'identifiant utilisateur, et
- l'imprimante devant être utilisée pour l'impression.

### 5. Avantages de l'invention

Les avantages de la présente invention sont :
- coûts d'implémentation, de maintenance et de logistique faibles,
- sécurité élevée grâce à l'utilisation d'un secret à usage unique sans transmission du secret,
- mobilité totale des utilisateurs (carte au format d'une carte de crédit),
- durée de vie importante d'une carte dans le cas d'un usage normal (minimum 5 ans),
- simplicité d'utilisation,
- simplicité d'implémentation, et
- possibilité d'utiliser du matériel standard pour la production des cartes.

## Revendications

1. Dispositif d'identification de l'utilisateur d'un système ou programme informatique local ou distant, à l'aide d'un secret à usage unique, **caractérisé en ce qu'**il comporte:
- un révélateur (1) comprenant un support graphique essentiellement plan et transparent présentant une première zone (11) sur laquelle est imprimé un code identifiant, une deuxième zone (12) contenant un quadrillage virtuel dont une pluralité de cases (120) est marquée graphiquement et une troisième zone (13) sur laquelle est imprimée une matrice de données, et
- un tableau de données aléatoires et de boutons logiciels ou tactiles, appelé challenge (2), affiché sur un écran d'ordinateur et comprenant une première zone (21) de données affichées dans une matrice correspondant au quadrillage de la deuxième zone (12) du révélateur et une seconde zone (22) comportant une matrice regroupant lesdits boutons et dont la position correspond à la matrice de données imprimées dans la troisième zone (13) du révélateur ;
le révélateur (1) et le challenge (2) étant configurés de manière telle que, lorsque le révélateur transparent (1) est appliqué physiquement par l'utilisateur exactement sur le challenge (2) affiché sur ledit écran, au moins un premier code secret, qui apparaît visuellement sur l'écran de l'ordinateur par correspondance entre les cases marquées (120) du révélateur (1) et ladite première zone (21) de données du challenge (2), soit converti en au moins un second code secret, par sélection successive par l'utilisateur de chacune des données du premier code secret, au moyen d'un périphérique de pointage appartenant au dispositif informatique utilisé, dans ladite matrice de boutons logiciels ou tactiles, chacun de ceux-ci étant associé visuellement et univoquement, par transparence au travers du révélateur (1), à une donnée de la troisième zone (13) du révélateur (1).

2. Dispositif selon la revendication 1, **caractérisé en ce que** le révélateur (1) est une carte plastique transparente dont les cases marquées (120) comportent une mise en évidence par un encadrement sous forme d'une bordure carrée, rectangulaire, ronde ou ovale, un soulignage, une coloration permettant de conserver la transparence de la carte ou encore un effet de loupe local et dont les données imprimées dans la troisième zone (13) sont des caractères alphanumériques et/ou des symboles graphiques, tels que des idéogrammes.

3. Dispositif selon la revendication 2, **caractérisé en ce que** toutes les cases marquées (120) sont mises en évidence de la même manière.

4. Dispositif selon la revendication 2, **caractérisé en ce que** les cases marquées (120) sont mises en évidence d'au moins deux manières différentes, pour générer au moins deux codes secrets possibles.

5. Dispositif selon la revendication 2, 3 ou 4, **caractérisé en ce que** les données aléatoires du challenge (2) affichées sur l'écran correspondent au moins en partie aux caractères alphanumériques et/ou symboles graphiques imprimés dans la troisième zone (13) du révélateur (1).

6. Dispositif selon l'une quelconque des revendications précédentes, **caractérisé en ce que** la matrice de données imprimée dans la troisième zone (13) du révélateur (1) comporte 1 ligne et n colonnes (n entier, n > 4), chaque donnée imprimée étant un chiffre allant de 0 à 9, **en ce que** les données aléatoires affichées dans la première zone (21) du challenge sont des chiffres allant de 0 à 9 et **en ce que** la seconde zone (22) du challenge (2) comporte une ligne de n boutons logiciels ou tactiles.

7. Dispositif selon l'une quelconque des revendications précédentes, **caractérisé en ce que** le périphérique de pointage est une souris ou un stylet, par exemple dans le cas d'un PDA.

8. Dispositif selon l'une quelconque des revendications précédentes, **caractérisé en ce que** le révélateur (1) est percé au niveau de sa troisième zone (13) en chacune des positions venant en regard d'un bouton du challenge (2), pour permettre l'utilisation du révélateur (1) dans le cas où le système informatique, par exemple un PDA, est muni d'un stylet.

9. Procédé d'identification de l'utilisateur d'un système ou programme informatique local ou distant, utilisant un secret à usage unique, au moyen du dispositif selon l'une quelconque des revendications précédentes, **caractérisé en ce qu'**il comporte les étapes suivantes :
- identification préalable par entrée par l'utilisateur d'un identifiant personnalisé,
- génération d'un challenge (2) de données aléatoires sur l'écran de l'ordinateur,
- application par l'utilisateur du révélateur (1) sur l'écran de l'ordinateur de manière telle que le révélateur (1) soit mis en concordance exacte avec le challenge (2),
- saisie par l'utilisateur, au moyen d'un périphérique de pointage, dans la zone de boutons logiciels ou tactiles du challenge (2), d'un premier code secret, de préférence à au moins 4 caractères ou symboles, révélé visuellement sur l'écran par correspondance univoque de cases marquées (120) du révélateur (1) avec des données aléatoires du challenge affiché (2), les données du code secret à saisir apparaissant également au niveau des boutons du challenge (2) par transparence du révélateur (1) apposé sur le challenge (2),
- conversion selon une loi de correspondance univoque du premier code secret en un second code secret, et
- vérification par le système informatique que le second code secret correspond bien à l'identifiant de l'utilisateur et/ou à la carte qui lui a été attribuée.

10. Procédé d'identification selon la revendication 9, **caractérisé en ce que**, lorsque la matrice de données imprimée dans la troisième zone (13) du révélateur (1) comporte 1 ligne et n colonnes (n entier strictement positif), chaque donnée imprimée étant un chiffre allant de 0 à 9, que les données aléatoires affichées dans la première zone (21) du challenge sont des chiffres allant de 0 à 9 et que la seconde zone (22) du challenge (2) comporte une ligne de n boutons, ladite loi de correspondance univoque consiste à attribuer à chaque symbole du premier code secret un chiffre qui correspond au rang r (1 ≤ r ≤ n) du bouton du challenge (2) sur lequel apparaît en transparence ledit symbole et qui est sélectionné par l'utilisateur au moyen du périphérique de pointage.

11. Procédé d'identification selon la revendication 9 ou 10, **caractérisé en ce que** qu'il comporte une étape intermédiaire de calibrage de la taille du challenge (2) affiché sur l'écran, de préférence au moyen de boutons logiciels ou tactiles (41, 42), de manière à permettre la correspondance exacte entre le cadre du révélateur (1) et le cadre du challenge (2) affiché.

12. Procédé selon la revendication 9, 10 ou 11, **caractérisé en ce que**, grâce à l'utilisation d'un révélateur (1) avec différents types de mise en évidence graphique de cases (120), l'utilisateur a le choix de la saisie d'un code secret parmi au moins deux possibilités, connues du système informatique.

13. Procédé de production de cartes-révélateurs (1) appartenant au dispositif d'identification selon l'une quelconque des revendications 1 à 8, **caractérisé par** les étapes suivantes:
- génération ou importation d'identifiants d'utilisateur,
- génération aléatoire de cartes-révélateurs (1) pour chaque nouvel utilisateur ou pour un utilisateur ou un ensemble d'utilisateurs déterminé,
- exportation dans un fichier externe d'une description desdites cartes, et
- impression d'une ou plusieurs desdites cartes.

14. Procédé selon la revendication 13, **caractérisé en ce que** l'on configure un ou plusieurs des paramètres suivants :
- ensemble des symboles utilisables pour générer les cartes,
- autorisation d'utiliser des symboles doubles par case,
- nombre minimum et maximum de cases par code secret,
- nombre total de cases par carte,
- mention d'un nom d'application, et
- mention de l'identifiant de l'utilisateur.

15. Programme d'ordinateur comprenant un code convenant pour mettre en oeuvre les étapes du procédé selon l'une quelconque des revendications 9 à 14, lorsque ledit programme est exécuté sur un ordinateur.

16. Programme d'ordinateur selon la revendication 15, mémorisé sur un support lisible par un ordinateur.

17. Utilisation du dispositif selon l'une quelconque des revendications 1 à 9, dans des applications bancaires.
